# EUROPEAN PATENT APPLICATION

(11) **EP 4 682 002 A1**
(43) Date of publication of application: **21.01.2026**
(21) Application number: 23931233.3
(22) Date of filing: 03.04.2023
(51) Int. Cl.: B60W 30/02, B60L 15/20

(54) **VEHICLE CONTROL METHOD AND DEVICE**

(71) Applicant: Shenzhen Yinwang Intelligent Technologies Co., Ltd., Shenzhen, Guangdong 518110 (CN)
(72) Inventor: LING, Mingze, Shenzhen, Guangdong 518129 (CN); HE, Lang, Shenzhen, Guangdong 518129 (CN); MA, Wentao, Shenzhen, Guangdong 518129 (CN); ZHOU, Yongyou, Shenzhen, Guangdong 518129 (CN); CAO, Zhongcheng, Shenzhen, Guangdong 518129 (CN); WU, Xiaoqin, Shenzhen, Guangdong 518129 (CN)
(74) Representative: Maiwald GmbH
(86) International application number: PCT/CN2023/086023
(87) International publication number: WO 2024/207157

(57) **Abstract**

A vehicle control method and control apparatus are disclosed. In the control method, whether a vehicle slips is detected by using a difference between an acceleration of a drive wheel and a traveling acceleration of the vehicle and/or a difference between a speed of the drive wheel and a traveling speed of the vehicle. When the drive wheel slips, drive torque output by a drive apparatus to the slipping drive wheel is controlled to be less than required torque, to ensure safety of the vehicle. Further, a slip rate of the drive wheel and a road condition of a road on which the vehicle is located are used as specific control constraints. When the vehicle is a four-wheel drive vehicle, the control method may further implement transfer and reallocation of drive torque, to improve power performance of the vehicle when the vehicle slips.

## Description

### TECHNICAL FIELD

This application relates to the field of vehicle technologies, and in particular, to a vehicle control method and control apparatus.

### BACKGROUND

In a traveling process of a vehicle, a drive wheel of the vehicle often slips. If the vehicle is on a low-traction road surface with low friction, the vehicle may even experience a loss of directional control. To ensure safety of the vehicle, anti-slip control needs to be performed on the vehicle.

In a method for controlling the vehicle to prevent the vehicle from slipping, a traction control system (traction control system, TCS) is configured on the vehicle. When detecting that the drive wheel slips, the TCS system controls drive torque or braking torque of the vehicle to improve traction of the wheel, so that the wheel no longer slips.

However, when a drive force or drive torque of the wheel is excessively large, the TCS system cannot well resolve the problem of vehicle slipping, and consequently, traveling safety of the vehicle cannot be ensured. For example, when the vehicle accelerates at full throttle, the drive torque of the vehicle is large, resulting in a large driving slip amplitude of the wheel. In this case, it is quite difficult for the TCS system to control, in a timely and effective manner, the wheel not to slip, causing safety and comfort problems to the vehicle.

### SUMMARY

This application provides a vehicle control method and control apparatus, to improve anti-slip performance of a vehicle, and further ensure power performance of the vehicle when the vehicle slips during acceleration.

According to a first aspect, this application provides a vehicle control method, including:
obtaining an acceleration of the vehicle and an acceleration of a first drive wheel of the vehicle, and/or a wheel speed of the first drive wheel and a traveling speed of the vehicle; and
when a first difference between the acceleration of the vehicle and the acceleration of the first drive wheel is greater than or equal to a first threshold, and/or a second difference between the wheel speed of the first drive wheel and the traveling speed of the vehicle is greater than or equal to a second threshold, controlling a drive apparatus of the vehicle to output first torque to the first drive wheel, where the first torque is less than first required torque of the first drive wheel.

In the method, the first difference between the acceleration of the vehicle and the acceleration of the first drive wheel or the second difference between the wheel speed of the first drive wheel and the traveling speed of the vehicle is used as a criterion for determining that the vehicle slips. After it is detected that the vehicle slips, drive torque of a slipping wheel is controlled to be less than required torque, to maintain traveling stability of the vehicle.

Optionally, controlling the drive apparatus of the vehicle to output the first torque to the first drive wheel includes:
controlling, based on the first difference and/or the second difference, the drive apparatus of the vehicle to output the first torque to the first drive wheel, where a larger first difference and/or a larger second difference indicate/indicates a larger torque difference between the first torque and the first required torque.

The first difference and the second difference can indirectly reflect a slipping degree of the vehicle. A larger first difference and/or a larger second difference indicate/indicates a severer slip of the vehicle. Therefore, a limitation on the first torque of the first drive wheel is larger, and correspondingly, a torque difference between the first torque and the first required torque is larger.

In some implementations, the method further includes: determining a gradient of a road on which the vehicle is located.

Controlling the drive apparatus of the vehicle to output the first torque to the first drive wheel includes:
controlling, based on the gradient, the drive apparatus of the vehicle to output the first torque to the first drive wheel, where a larger gradient indicates a larger torque difference between the first torque and the first required torque.

The gradient is an important indicator of a road condition of the road on which the vehicle is located. A larger gradient indicates a worse road condition and a larger limitation on the first torque output to the first drive wheel in a bad road condition.

In some implementations, the method further includes: determining a difference between slip rates of a plurality of drive wheels of the vehicle, where the plurality of drive wheels include at least two of the first drive wheel, a second drive wheel, a third drive wheel, and a fourth drive wheel, the first drive wheel and the second drive wheel are connected to a first transmission shaft of the vehicle, the first drive wheel and the second drive wheel are located on different sides of the vehicle, the third drive wheel and the fourth drive wheel are connected to a second transmission shaft of the vehicle, the first drive wheel and the third drive wheel are located on a same side of the vehicle, and the first drive wheel and the fourth drive wheel are located on different sides of the vehicle.

Controlling the drive apparatus of the vehicle to output the first torque to the first drive wheel includes:
controlling, based on the difference between the slip rates of the plurality of drive wheels, the drive apparatus of the vehicle to output the first torque to the first drive wheel, where a torque difference between the first torque and the first required torque is associated with the difference between the slip rates of the plurality of drive wheels.

In some implementations, the plurality of drive wheels include the first drive wheel and the second drive wheel.

When a third difference between a slip rate of the first drive wheel and a slip rate of the second drive wheel is greater than or equal to a third threshold, the torque difference is a first torque difference; or when the third difference is less than the third threshold, the torque difference is a second torque difference, and the first torque difference is greater than the second torque difference.

Optionally, the plurality of drive wheels further include the third drive wheel.

When a fourth difference between the slip rate of the first drive wheel and a slip rate of the third drive wheel is greater than or equal to a fourth threshold, the torque difference is a third torque difference, and the first torque difference is greater than the third torque difference.

Optionally, the plurality of drive wheels further include the fourth drive wheel.

When a fifth difference between the slip rate of the first drive wheel and a slip rate of the fourth drive wheel is less than a fifth threshold and the third difference is greater than or equal to the third threshold, the torque difference is a fourth torque difference, and the fourth torque difference is greater than the second torque difference and/or the third torque difference.

A slip rate difference between drive wheels may be used to determine a road surface type of a road surface on which the vehicle is located. The first torque output to the first drive wheel is limited to different degrees based on different road surface types. Therefore, the torque difference also changes correspondingly. The first torque is limited based on the road condition, to ensure power performance of the vehicle.

In some implementations, the vehicle includes the first transmission shaft and the second transmission shaft, the first transmission shaft is a transmission shaft connected to the first drive wheel, and the method further includes:
controlling the drive apparatus of the vehicle to output second torque to a non-slipping wheel of the vehicle, where the non-slipping wheel is connected to the second transmission shaft, a difference between an acceleration of the non-slipping wheel and the acceleration of the vehicle is less than the first difference, a difference between a wheel speed of the non-slipping wheel and the traveling speed of the vehicle is less than the second difference, the second torque is greater than required torque of the non-slipping wheel, and a torque difference between the second torque and the second required torque of the non-slipping wheel is equal to the torque difference between the first torque and the first required torque.

The torque difference between the second torque and the second required torque of the non-slipping wheel is controlled to be equal to the torque difference between the first torque and the first required torque, that is, the torque difference lost by the slipping first drive wheel is allocated to the non-slipping wheel, to implement torque transfer and reallocation, ensure that total torque of the vehicle is consistent with total required torque, and ensure acceleration performance of the vehicle.

In some implementations, after controlling the drive apparatus of the vehicle to output the first torque to the first drive wheel for first duration, the method further includes:
if a difference between the acceleration of the vehicle and the acceleration of the first drive wheel is greater than or equal to the first difference, and/or a difference between the wheel speed of the first drive wheel and the traveling speed of the vehicle is greater than or equal to the second difference, controlling the drive apparatus of the vehicle to output third torque to the first drive wheel, where the third torque is less than the first torque.

After the first torque output to the first drive wheel is limited within the first duration, if the first drive wheel still slips, the torque corresponding to the first drive wheel is further controlled, to ensure traveling stability of the vehicle.

According to a second aspect, this application provides a control apparatus, including a processor and a memory communicatively connected to the processor, where the memory stores computer-executable instructions. The processor executes the computer-executable instructions stored in the memory, to implement the vehicle control method provided in the foregoing implementations.

According to a third aspect, this application provides a computer-readable storage medium, where the computer-readable storage medium stores computer-executable instructions, and when being executed by a processor, the computer-executable instructions are used to implement the vehicle control method provided in the foregoing implementations.

According to a fourth aspect, this application provides a computer program product, including a computer program. When the computer program is executed by a processor, any vehicle control method mentioned in the foregoing implementations is implemented.

### BRIEF DESCRIPTION OF DRAWINGS

The accompanying drawings herein are incorporated into this specification and constitute a part of this specification, to show embodiments in accordance with this application, and are used, together with this specification, to explain the principle of this application.
FIG. 1 is a diagram of states and modes of a vehicle anti-slip pre-control system according to an embodiment of this application;
FIG. 2 is a diagram of a working procedure of a control method when a vehicle anti-slip pre-control system is in a running mode according to an embodiment of this application;
FIG. 3 is a diagram of a control procedure of a control method applied to a vehicle according to an embodiment of this application;
FIG. 4 is a diagram of effect of applying a control method to a dual-motor four-wheel drive new energy vehicle whose front drive wheel slips according to an embodiment of this application;
FIG. 5 is a diagram of effect of applying a control method to a dual-motor four-wheel drive new energy vehicle whose front and rear drive wheels both slip according to an embodiment of this application;
FIG. 6 is a diagram of a structure of a vehicle control apparatus according to an embodiment of this application; and
FIG. 7 is a diagram of a structure of a vehicle control apparatus according to another embodiment of this application.

The foregoing accompanying drawings show specific embodiments of this application, and more detailed descriptions are provided below. The accompanying drawings and text descriptions are not intended to limit the scope of the idea of this application in any manner, but are intended to describe the concept of this application to a person skilled in the art with reference to particular embodiments.

### DESCRIPTION OF EMBODIMENTS

Example embodiments are described in detail herein, and examples thereof are presented in the accompanying drawings. When the following descriptions relate to the accompanying drawings, unless specified otherwise, same numbers in different accompanying drawings represent a same or similar element. Implementations described in the following example embodiments do not represent all implementations consistent with this application. On the contrary, the implementations are merely examples of apparatuses and methods that are described in the appended claims in detail and that are consistent with some aspects of this application.

A drive wheel is prone to slipping and even experiencing a loss of directional control when a vehicle starts and travels on a low-traction road with low friction. To ensure safety performance of the vehicle, in an existing manner, a TCS traction control system is mounted on the vehicle. When detecting that the drive wheel of the vehicle slips, the TCS system controls drive torque or braking torque to improve traction of the slipping wheel, and maintain traveling stability of the vehicle.

However, intervention of the TCS control has a communication delay, and adjustment can be fed back only in a case of vehicle instability. For a new energy vehicle, a drive motor has a smaller rotation inertia and larger acceleration torque. A control lag of the TCS system makes it easier for the new energy vehicle to have a large slip. In addition, torque limiting power of the TCS is large, easily causing a power loss when the vehicle accelerates.

For the foregoing problem, this application provides a vehicle control method and control apparatus, to improve anti-slip performance of a vehicle, and further ensure power performance of the vehicle when the vehicle slips during acceleration.

A technical idea of this application is as follows: Slipping of a drive wheel of the vehicle is detected by using a difference between an acceleration of the vehicle and an acceleration of the drive wheel and/or a difference between a speed of the vehicle and a wheel speed of the drive wheel, and drive torque of the slipping drive wheel is controlled based on information about a road condition of the vehicle, to improve anti-slip performance of the vehicle.

In view of this, this application further provides a technical solution of torque transfer for a four-wheel drive vehicle, to improve acceleration performance of the vehicle when the vehicle slips during acceleration.

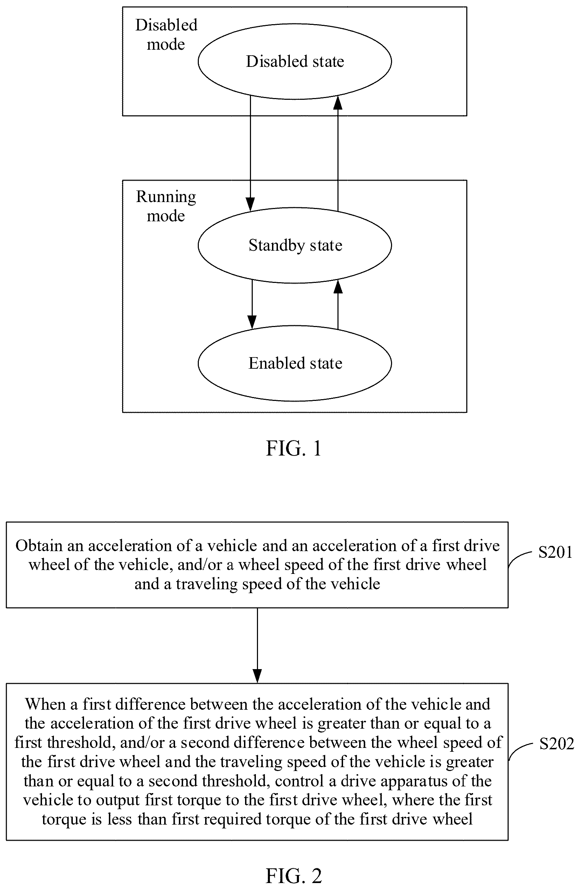

The vehicle control method provided in this application is applied to a vehicle anti-slip pre-control system. FIG. 1 is a diagram of states and modes of the vehicle anti-slip pre-control system according to an embodiment of this application. As shown in FIG. 1, the vehicle anti-slip pre-control system has a running mode and a disabled mode. Switching between the running mode and the disabled mode may be triggered in a human-machine interaction manner like using a physical button in a compartment or a soft switch on a main control screen. In some implementations, the vehicle anti-slip pre-control system may alternatively follow a vehicle status, and automatically enter the running mode as the vehicle starts.

In the disabled mode, the vehicle anti-slip pre-control system is correspondingly in a disabled state. If the vehicle is in a start state in this case, a vehicle control unit (vehicle control unit, VCU) cyclically detects an indication value used to identify a mode of the vehicle anti-slip pre-control system in a vehicle system. In an example, when the indication value is 0, it indicates that the vehicle anti-slip pre-control system is in the disabled mode.

When a user triggers switching through a human-machine interaction operation like the physical button in the compartment or the soft switch on the main control screen, the vehicle system receives a switching signal, and updates the indication value for the mode of the vehicle anti-slip pre-control system. In an example, when the vehicle anti-slip pre-control system is in the disabled mode, the user presses an enable button in the compartment, and the vehicle system considers a button signal as the switching signal, and updates the indication value for the mode of the vehicle anti-slip pre-control system to 1. After detecting the new indication value, the vehicle control unit controls the vehicle anti-slip pre-control system to enter the running mode.

The vehicle anti-slip pre-control system has a standby state and an enabled state in the running mode. When the vehicle anti-slip pre-control system switches from the disabled mode to the running mode, an initial state is the standby state. FIG. 2 is a diagram of a working procedure of a control method when the vehicle anti-slip pre-control system is in the running mode according to an embodiment of this application. As shown in FIG. 2, the control method is as follows:
S201: Obtain an acceleration of the vehicle and an acceleration of a first drive wheel of the vehicle, and/or a wheel speed of the first drive wheel and a traveling speed of the vehicle.

In the standby state, the vehicle system obtains the acceleration of the vehicle, the acceleration of the drive wheel of the vehicle, the traveling speed of the vehicle, and the wheel speed of the drive wheel of the vehicle through a vehicle sensor, where the wheel speed of the drive wheel may be converted based on a rotation speed of a drive apparatus corresponding to the drive wheel.

S202: When a first difference between the acceleration of the vehicle and the acceleration of the first drive wheel is greater than or equal to a first threshold, and/or a second difference between the wheel speed of the first drive wheel and the traveling speed of the vehicle is greater than or equal to a second threshold, control the drive apparatus of the vehicle to output first torque to the first drive wheel, where the first torque is less than first required torque of the first drive wheel.

The vehicle anti-slip pre-control system calculates a difference between an acceleration of each drive wheel and the acceleration of the vehicle and a difference between a wheel speed of each drive wheel and the traveling speed of the vehicle. When an acceleration difference between any drive wheel and the vehicle is not less than the first threshold, and/or a wheel speed difference between the drive wheel and the vehicle is not less than the second threshold, the vehicle anti-slip pre-control system determines that the drive wheel slips. It may be understood that the first threshold and the second threshold are manually preset, and the vehicle anti-slip pre-control system determines, based on the first threshold and the second threshold, whether the drive wheel of the vehicle slips.

In the running mode, to distinguish between the standby state and the enabled state, in an example, the vehicle system indicates a function status of the vehicle anti-slip pre-control system by using another status indication field. When the indication field is 10, it indicates that the vehicle anti-slip pre-control system is in the standby state. In this case, the vehicle anti-slip pre-control system determines, in the foregoing manner, whether the drive wheel of the vehicle slips. After determining that there is a slipping drive wheel, the vehicle anti-slip pre-control system sends a slip signal to the vehicle system, and the vehicle system updates the indication field to 11 based on the slip signal. After detecting the indication field, the vehicle control unit controls the vehicle anti-slip pre-control system to enter the enabled state.

In the enabled state, the vehicle anti-slip pre-control system can determine, based on the slip signal, a specific slipping drive wheel, and control, based on a slip rate of the drive wheel of the vehicle and a road condition of the vehicle, torque of a drive apparatus corresponding to the slipping drive wheel. Drive torque of the drive wheel is determined by the corresponding drive apparatus. Therefore, when the drive wheel slips, the vehicle anti-slip pre-control system actually controls the drive torque output by the drive apparatus corresponding to the slipping drive wheel to the slipping drive wheel. The drive torque is less than required torque of the slipping drive wheel.

The required torque of the drive wheel is allocated and calculated based on total required torque of the vehicle. In an actual driving process, the vehicle system converts the total required torque into a total required torque signal of the vehicle based on a depth of a throttle pedal stepped down by a driving user, and the vehicle control unit obtains the total required torque signal through a vehicle communication network. In some special scenarios, for example, in an unmanned driving environment, the total required torque may be total drive torque required by the vehicle for normal traveling according to unmanned driving instructions.

For a two-wheel drive vehicle, the vehicle control unit controls the drive apparatus to allocate, to a transmission shaft connected to drive wheels, the total required torque indicated by the total required torque signal, and torque on a transmission shaft connected to the slipping drive wheel is the required torque of the slipping drive wheel. For a four-wheel drive vehicle, torque required by a front drive transmission shaft and a rear drive transmission shaft may be different, and is determined based on a specific vehicle parameter. Based on a front-to-rear torque allocation coefficient of the vehicle, the vehicle control unit controls the drive apparatus to allocate the total required torque to the corresponding transmission shafts. It should be noted that a drive apparatus in a new energy vehicle is correspondingly a drive motor, and each drive wheel in the vehicle may have a corresponding drive motor. In this case, the vehicle system calculates corresponding required torque for each drive wheel based on total required torque and a specific vehicle parameter.

In comparison with a TCS system, the detection manner used in the control method provided in this embodiment allows quicker identification of a slip of the drive wheel, and the drive apparatus is controlled to output the first torque to the first drive wheel, so that the first torque is less than the required torque of the first drive wheel, to ensure traveling stability of the vehicle.

In some implementations, for the four-wheel drive vehicle, the vehicle anti-slip pre-control system in the enabled state may not only control the drive torque output by the drive apparatus corresponding to the slipping drive wheel to the slipping drive wheel, but also implement torque reallocation. Specifically, the vehicle anti-slip pre-control system calculates a torque difference between the drive torque output to the slipping drive wheel and the required torque of the slipping drive wheel, and allocates the torque difference to a non-slipping drive wheel. It may be understood that the vehicle anti-slip pre-control system can directly allocate the torque difference to the non-slipping drive wheel only when the drive wheel can directly control the drive torque of the drive wheel through a corresponding drive motor. when the drive wheel cannot directly control the drive torque of the drive wheel through the corresponding drive motor, the vehicle anti-slip pre-control system can allocate the torque difference only to a transmission shaft connected to the non-slipping drive wheel, and implement torque reallocation through the transmission shaft.

In the foregoing embodiments, switching of the vehicle anti-slip pre-control system between modes and states is described. The following describes a specific manner in which the vehicle anti-slip pre-control system in the enabled state controls the torque of the drive apparatus corresponding to the slipping drive wheel based on a slip rate of the drive wheel of vehicle and the road condition of the vehicle.

An embodiment of this application provides a control method. After entering the enabled state, the vehicle anti-slip pre-control system may obtain slip rates of drive wheels of the vehicle through calculation based on the traveling speed of the vehicle and wheel speeds of the drive wheels of the vehicle. A type of a road surface on which the vehicle is located may be determined by comparing the slip rates of the drive wheels. A gradient angle of the road surface on which the vehicle is located may be determined by using gradient information obtained by a vehicle gradient sensor. The type of the road surface on which the vehicle is located and the gradient angle indicates a road condition of the road surface on which the vehicle is located.

In some implementations, the vehicle anti-slip pre-control system classifies ramp levels based on the gradient angle of the road surface on which the vehicle is located. An example is as follows:
When the gradient angle is less than 5°, it is determined that the vehicle is on a flat road surface.

When the gradient angle is greater than or equal to 5° and less than 15°, it is determined that the vehicle is on a small-ramp road surface.

When the gradient angle is greater than or equal to 15° and less than 25°, it is determined that the vehicle is on a middle-ramp road surface.

When the gradient angle is greater than or equal to 25°, it is determined that the vehicle is on a large-ramp road surface.

The vehicle anti-slip pre-control system determines the road surface type of the road surface on which the vehicle is located by calculating a slip rate difference between drive wheels. An example is as follows:
For the two-wheel drive vehicle, the first drive wheel and a second drive wheel are respectively located on left and right sides of the vehicle. When a slip rate difference between the first drive wheel and the second drive wheel is greater than or equal to a third threshold, it is determined that the vehicle is on a split road surface, and the split road surface indicates that road surface traction coefficients on the left and right sides of the vehicle are different.

When the slip rate difference between the first drive wheel and the second drive wheel is less than the third threshold, it is determined that the vehicle is on a uniform road surface, and the uniform road surface indicates that road surface traction coefficients of the wheels on the left and right sides of the vehicle are the same.

For the four-wheel drive vehicle, a third drive wheel and a fourth drive wheel are located on left and right sides of the vehicle, the third drive wheel and the first drive wheel are located on a same side of the vehicle, the first drive wheel and a second drive wheel are used as front drive wheels of the vehicle, and the third drive wheel and the fourth drive wheel are used as rear drive wheels of the vehicle. When a slip rate difference between either front drive wheel and a rear drive wheel on a same side is greater than or equal to a fourth threshold, it is determined that the vehicle is on a transition road surface, the transition road surface indicates that road surface traction coefficients of wheels on the front and rear shafts of the vehicle are different.

When a slip rate difference between drive wheels on left and right sides of a same shaft of the vehicle is greater than the third threshold and a slip rate difference between drive wheels on a diagonal of the vehicle is less than the fourth threshold, it is determined that the vehicle is on a checkerboard road surface. The checkerboard road surface indicates that road surface traction coefficients of the wheels on the two sides of the same shaft of the vehicle are different, and road surface traction coefficients of the drive wheels on the diagonal of the vehicle are the same.

It may be understood that both the third threshold and the fourth threshold are manually set.

In the enabled state, the vehicle anti-slip pre-control system controls, based on the slip rate of the slipping drive wheel and the road condition that is of the road surface on which the vehicle is located and that is obtained through identification, the drive torque output by the drive apparatus. In an example, the driving user steps down the throttle in the traveling process of the vehicle, and prepares to accelerate the vehicle. The vehicle system converts a depth of the throttle pedal stepped down by the driving user into a total required torque signal of the vehicle, and the vehicle control unit obtains the total required torque signal through the vehicle communication network. The vehicle is a dual-motor four-wheel drive vehicle. Therefore, the vehicle system calculates, based on a vehicle allocation coefficient, required torque allocated to the front/rear shaft. The required torque of the drive wheel of the vehicle corresponds to the drive torque of the connected transmission shaft. When the wheel speed of the first drive wheel of the vehicle and the traveling speed of the vehicle reach the first threshold, the vehicle anti-slip pre-control system in the running mode determines that the first drive wheel slips, switches from the standby state to the enabled state, and enters first-round control of the vehicle anti-slip pre-control system.

Because the vehicle is in an accelerated traveling process, the vehicle anti-slip pre-control system controls the first torque output by the drive motor corresponding to the first drive wheel to the transmission shaft connected to the first drive wheel to be in a rising state. To ensure that the first torque is less than the required torque of the first drive wheel, a rising speed of the first torque is dynamically limited in the control method provided in this application. Control logic of the control method is as follows:
A larger slip rate of the first drive wheel indicates a larger limitation on the rising speed of the first torque, that is, the rising speed of the first torque is controlled to be slower. A formula for a slip rate of a wheel is: Slip rate = (Wheel speed - Vehicle speed)/Wheel speed x 100%. The slip rate may be considered as another expression form of a difference between a wheel speed of the drive wheel and the traveling speed of the vehicle. Therefore, a larger slip rate of the first drive wheel indicates a larger difference between the wheel speed of the first drive wheel and the traveling speed of the vehicle, and indicates a severer slip of the first drive wheel. Therefore, the limitation on the rising speed of the first torque increases as the slip rate increases. In this case, the difference between the first torque and the required torque of the first drive wheel is also larger.

A larger gradient angle of the road surface on which the vehicle is located indicates a larger limitation on the rising speed of the first torque, that is, the rising speed of the first torque is controlled to be slower. The gradient angle of the road surface on which the vehicle is located indicates quality of the road condition. A larger gradient angle indicates a higher requirement for safety performance of the vehicle. Therefore, a larger gradient angle indicates a larger limitation on the rising speed of the first torque. For example, based on the foregoing ramp levels, the vehicle anti-slip pre-control system has a smallest limitation on the rising speed of the first torque when the vehicle is on the flat road surface, and has a largest limitation on the rising speed of the first torque when the vehicle is on the large-ramp road surface.

When the vehicle is located on the uniform road surface or the transition road surface, the limitation on the rising speed of the first torque is small. When the vehicle is located on the split road surface or the chessboard road surface, the limitation on the rising speed of the first torque is large. Similar to the gradient angle, the type of the road surface on which the vehicle is located may indicate the quality of the road condition. Compared with the split road surface and the checkerboard road surface, the uniform road surface and the transition road surface have stronger road surface traction. Therefore, when the vehicle is on the uniform road surface or the transition road surface, a limitation on the rising speed of the first torque is smaller, and a difference between the first torque and the required torque of the first drive wheel is also smaller.

It may be understood that the wheel anti-slip pre-control system may dynamically limit the rising speed of the first torque through an intelligent braking system (intelligent braking system, IBS), a motor control unit (motor control unit, MCU), or the vehicle control unit.

According to the control method provided in this application, timing is performed when the wheel anti-slip pre-control system enters the enabled state, and the rising speed of the first torque is dynamically limited within time of a first round of control. After the time of the first-round control ends, the wheel anti-slip pre-control system switches from the enabled state to the standby state, and the wheel anti-slip pre-control system in the standby state continues to detect whether each drive wheel of the vehicle slips.

If the first drive wheel still slips with an increasing slip rate after the first round of control, according to the control method provided in this application, the wheel anti-slip pre-control system switches to the enabled state, and enters a second round of control on the first torque. Because the slip rate of the first drive wheel increases after the first round of control, the wheel anti-slip pre-control system further limits the rising speed of the first torque. In some implementations, the rising speed of the first torque is limited to zero, that is, the first torque is controlled not to rise, so that the first torque is consistent with drive torque output by the drive motor corresponding to the first drive wheel to the transmission shaft connected to the first drive wheel at a previous moment. After the time of the second-round control ends, the wheel anti-slip pre-control system switches from the enabled state to the standby state, and the wheel anti-slip pre-control system in the standby state continues to detect whether each drive wheel of the vehicle slips.

If the first drive wheel still slips and the slip rate does not decrease after the second round of control, according to the control method provided in this application, the wheel anti-slip pre-control system switches to the enabled state, and enters a third round of control on the first torque. After two rounds of control, the first drive wheel still slips. To ensure safety of the vehicle, the vehicle anti-slip pre-control system limits the rising speed of the first torque to a negative value. In other words, the vehicle anti-slip pre-control system performs torque reduction control on the first torque. It should be noted that, in the control method provided in this application, a torque reduction speed of the first torque is also dynamically limited, and control logic of the control method is as follows:
A larger slip rate of the first drive wheel indicates a smaller limitation on the torque reduction speed of the first torque, that is, the torque reduction speed of the first torque is controlled to be faster. A larger slip rate of the first drive wheel indicates a severer slip of the first drive wheel. Therefore, a limitation on the torque reduction speed of the first torque decreases as the slip rate increases, and the first torque is reduced as much as possible while acceleration performance is ensured.

A larger gradient angle of the road surface on which the vehicle is located indicates a smaller limitation on the torque reduction speed of the first torque, that is, the torque reduction speed of the first torque is controlled to be faster. When the gradient angle of the road surface on which the vehicle is located is larger, to ensure safety performance of the vehicle, the first torque of the vehicle needs to be as small as possible on a premise that a ramping requirement is met. Therefore, the torque reduction speed of the first torque needs to increase.

When the vehicle is located on the uniform road surface or the transition road surface, the limitation on the torque reduction speed of the first torque is large. When the vehicle is located on the split road surface or the chessboard road surface, the limitation on the torque reduction speed of the first torque is small. Similar to the gradient angle, the type of the road surface on which the vehicle is located may indicate the quality of the road condition. Compared with the uniform road surface and the transition road surface, the split road surface and the checkerboard road surface have weaker road surface traction. Therefore, when the vehicle is on the uniform road surface or the transition road surface, a limitation on the torque reduction speed of the first torque is larger, and a difference between the first torque and the required torque of the first drive wheel is also larger.

It should be noted that, because the vehicle is a four-wheel drive vehicle, in the plurality of rounds of control on the first torque, the vehicle anti-slip pre-control system may transfer the torque difference between the first torque and the first required torque to the transmission shaft connected to the non-slipping drive wheel.

For example, after the driving user steps down the throttle pedal, the vehicle system may obtain, through conversion based on a depth of the throttle pedal, a total torque requirement T of the vehicle. Based on the vehicle allocation coefficient, required torque of the first transmission shaft connected to the first drive wheel is T1. Therefore, the first required torque is T1. Required torque of the second transmission shaft connected to the non-slipping third drive wheel and the non-slipping fourth drive wheel is T2. In the first round of control, after the rising speed of the first torque is dynamically limited, the first torque is finally T3, and a torque difference between the first required torque T1 and the first torque T3 is ΔT = T1 - T3. The vehicle anti-slip pre-control system allocates the torque difference ΔT to the second transmission shaft. In this way, torque on the second transmission shaft is T2 + Δ, and total torque of the entire vehicle is consistent with the total required torque.

In this embodiment, the drive torque output by the drive apparatus corresponding to the slipping drive wheel to the slipping drive wheel is controlled based on the slip rate of the vehicle and the road condition of the road surface on which the vehicle is located, so that a large slip of the vehicle can be avoided when the torque is large. In addition, for the new energy vehicle, a battery overcurrent phenomenon caused by a rapid rise of a rotational speed of a drive motor corresponding to a slipping drive wheel can be avoided, to ensure electric energy management safety of the new energy vehicle. Further, torque transfer and reallocation are performed on the four-wheel drive vehicle, to ensure power performance of the vehicle when the vehicle slips, thereby implementing acceleration consistency.

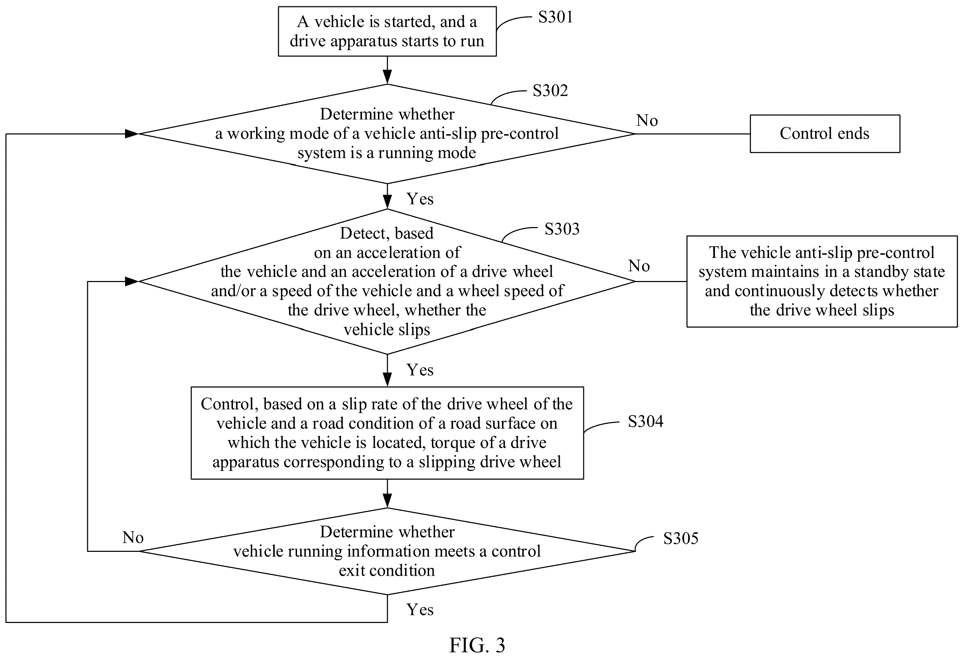

Based on the foregoing described embodiments, the following completely describes, with reference to FIG. 3, a control process in which the control method provided in this application is applied to a vehicle anti-slip pre-control system. FIG. 3 is a diagram of a control procedure in which the control method is applied to the vehicle anti-slip pre-control system according to an embodiment of this application.

As shown in FIG. 3, the control procedure of the control method provided in this application specifically includes the following steps.

S301: A vehicle is started, and a drive apparatus starts to run.

S302: Determine whether a working mode of the vehicle anti-slip pre-control system is a running mode.

In an example, the working mode of the vehicle anti-slip pre-control system is classified into the running mode and a disabled mode. A user controls the working mode of the anti-slip pre-control system through a human-machine interaction operation like an enable button in a compartment or a soft switch on a main control screen.

For a vehicle system, the working mode of the vehicle anti-slip pre-control system is determined by using a working mode indication value. For example, when the working mode indication value is 0, the vehicle anti-slip pre-control system is in the disabled mode. When the working mode indication value is 1, the vehicle anti-slip pre-control system is in the running mode. The vehicle system updates the working mode indication value based on a switching signal entered by the user. The vehicle anti-slip pre-control system switches the working mode based on the working mode indication value.

In some implementations, the vehicle anti-slip pre-control system automatically enters the running mode when the vehicle is started, and the user may disable the vehicle anti-slip pre-control system through the foregoing human-machine interaction operation.

It should be noted that, after the vehicle anti-slip pre-control system enters the running mode, the running mode is further classified into a standby state and an enabled state, and an initial state is the standby state. If the vehicle anti-slip pre-control system is in the disabled mode, subsequent control cannot be performed, and the control procedure ends.

S303: Detect, based on an acceleration of the vehicle and an acceleration of a drive wheel and/or a speed of the vehicle and a wheel speed of the drive wheel, whether the vehicle slips.

In the standby state, the vehicle anti-slip pre-control system continuously detects, based on a difference between the acceleration of the vehicle and the acceleration of the drive wheel and/or a difference between the speed of the vehicle and the wheel speed of the drive wheel, whether the drive wheel slips. Only when it is detected that the drive wheel slips, step S204 is performed, and the vehicle anti-slip pre-control system switches from the standby state to the enabled state. when the drive wheel cannot directly control the drive torque of the drive wheel through the corresponding drive motor, the vehicle anti-slip pre-control system maintains in the standby state and continuously detects whether the drive wheel slips.

The vehicle system indicates a function status of the vehicle anti-slip pre-control system by using another status indication field. For example, when the indication field is 10, it indicates that the vehicle anti-slip pre-control system is in the standby state. When the indication field is 11, it indicates that the vehicle anti-slip pre-control system is in the enabled state. A vehicle control unit updates the field based on a slip signal sent by the vehicle anti-slip pre-control system, and the vehicle anti-slip pre-control system performs status switching based on the indication field.

S304: Control, based on a slip rate of the drive wheel of the vehicle and a road condition of a road surface on which the vehicle is located, torque of a drive apparatus corresponding to the slipping drive wheel.

In this step, the wheel anti-slip pre-control system is correspondingly in the enabled state. First, a type of the road surface on which the vehicle is located is determined based on a slip rate difference between drive wheels. Both a gradient angle and gradient information of the road surface on which the vehicle is located are road condition information of the road surface on which the vehicle is located.

The vehicle anti-slip pre-control system controls a drive apparatus corresponding to a slipping first drive wheel to output first torque to the corresponding first drive wheel, and overall control logic thereof is to make the first torque less than required torque of the first drive wheel. For a four-wheel drive vehicle, in some implementations, the vehicle anti-slip pre-control system may further control torque transfer and reallocation. A detailed control example has been described in the foregoing embodiments, and details are not described herein again. It should be noted that, after each round of control ends, the vehicle anti-slip pre-control system first enters step S205.

S305: Determine whether vehicle running information meets a control exit condition.

In this step, in an example, the exit condition includes:
(1) a vehicle chassis function intervenes, where the chassis function is, for example, an anti-lock brake system (anti-lock brake system, ABS), a TCS system, or an electronic stability controller (electronic stability controller, ESC);
(2) a driving user reduces a depth of a stepped throttle pedal;
(3) the driving user steps down a brake pedal; and
(4) the first torque controlled by the vehicle anti-slip pre-control system is greater than first required torque.

When any one of the foregoing four conditions is met, the control procedure jumps to S202, to re-determine the working mode of the vehicle anti-slip pre-control system. Otherwise, after each round of control ends, the vehicle anti-slip pre-control system switches from the enabled state to the standby state, and performs a plurality of rounds of cyclic control until any one of the foregoing four conditions occurs on the vehicle.

In this embodiment, the control procedure of the control method provided in this application in the vehicle is completely described. According to the control procedure, stability of the vehicle can be maintained in an acceleration traveling process of the vehicle, and acceleration performance of the vehicle can be ensured.

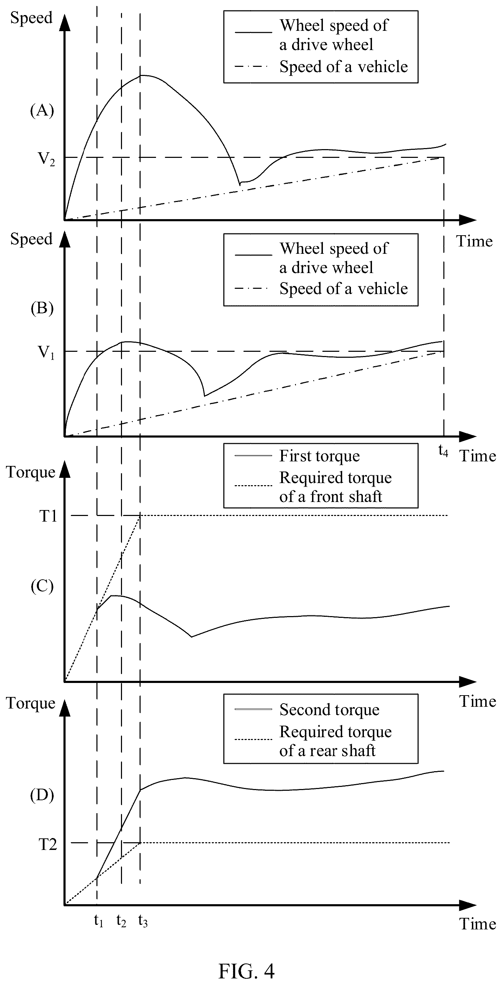

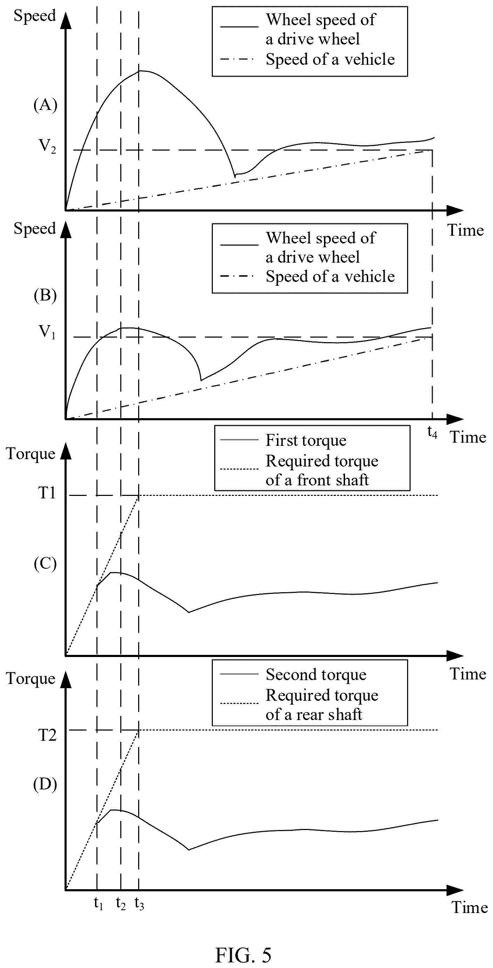

With reference to FIG. 4 and FIG. 5, the following more intuitively shows effect of the control method provided in this application. A subgraph (A) in FIG. 4 shows speed changes of a drive wheel and a vehicle when the vehicle uses only a TCS system. A subgraph (B) in FIG. 4 shows speed changes of the drive wheel and the vehicle when the vehicle enables the vehicle anti-slip pre-control system provided in this application. A subgraph (C) and a subgraph (D) in FIG. 4 respectively show changes of first torque and second torque when the vehicle anti-slip pre-control system is enabled.

The vehicle shown in FIG. 4 is a dual-motor four-wheel drive new energy vehicle. The vehicle is in an acceleration process, and the vehicle anti-slip pre-control system works in a running mode. A vehicle system calculates, based on a torque allocation coefficient of the vehicle, required torque of a front shaft as T1, and required torque of a rear shaft as T2. As shown in FIG. 4, the vehicle anti-slip pre-control system detects, at a moment t₁, that a difference between a wheel speed of a front wheel of the vehicle and a speed of the vehicle reaches a second threshold, and determines that the front wheel of the vehicle slips. However, a difference between a wheel speed of a rear wheel of the vehicle and the speed of the vehicle does not reach the second threshold. Therefore, the rear wheel of the vehicle does not slip. A slip rate difference between a front wheel and a rear wheel on a same side of the vehicle is greater than a slip rate difference threshold. Therefore, the vehicle is on a transition road surface at the moment t₁.

As shown in the subgraph (C) in FIG. 4, the vehicle anti-slip pre-control system switches from a standby state to an enabled state at the moment t₁, to limit a rising speed of the first torque output by a drive motor corresponding to the front shaft to the front shaft. Because the first torque is in a rising state and a slip rate of the front wheel does not decrease, the vehicle anti-slip pre-control system further limits the rising speed of the first torque. As shown in the subgraph (B), the wheel speed of the slipping front wheel rises to a peak value at a moment t₂. Then, as the vehicle anti-slip pre-control system performs torque reduction on the first torque, the wheel speed of the slipping front wheel decreases accordingly, and gradually approaches the speed of the vehicle.

As shown in the subgraph (D) in FIG. 4, because the front wheel of the vehicle slips and the rear wheel does not slip, when controlling the first torque at the moment t₁, the vehicle anti-slip pre-control system further allocates a difference between the first torque and the required torque of the front shaft to the second torque corresponding to the rear shaft, so that total torque of the front shaft and the rear shaft is consistent with total required torque of the vehicle. Therefore, it can be observed that the speed of the vehicle in the subgraph (A) and the subgraph (B) increases steadily. This ensures acceleration consistency of the vehicle.

It can be learned from the subgraph (A) and the subgraph (D) that, if there is no vehicle anti-slip pre-control system in the vehicle, when stability of the vehicle is ensured only by the TCS system, the wheel speed of the slipping front wheel continuously rises, and the TCS system does not detect that the vehicle slips and perform torque reduction control on the front shaft until a moment t₃. At the moment t₃, the wheel speed of the slipping wheel is far greater than the speed of the vehicle. With only the TCS system, the vehicle is very likely to slip.

In addition, as shown in the subgraph (A) and the subgraph (B) in FIG. 4, after an acceleration of same duration, at a moment t₄, the vehicle that enables the vehicle anti-slip pre-control system can accelerate to a speed V₁, and the vehicle that does not enable the system accelerates to a speed V₂, where the speed V₁ is higher than the speed V₂, indicating that acceleration performance is enhanced by using the control method provided in this application.

A scenario corresponding to FIG. 5 is similar to that in FIG. 4. A difference lies in that the vehicle anti-slip pre-control system detects, at the moment t₁, that a difference between the wheel speed of the front wheel of the vehicle and the speed of the vehicle and a difference between the wheel speed of the rear wheel and the speed of the vehicle both reach the second threshold, and determines that both the front wheel and the rear wheel of the vehicle slip. Because a slip rate difference between a front wheel and a rear wheel on either side of the vehicle is less than the slip rate difference threshold, the vehicle is on a uniform road surface at the moment t₁.

As shown in a subgraph (D) in FIG. 5, because both the front wheel and the rear wheel of the vehicle slip, the vehicle anti-slip pre-control system switches from the standby state to the enabled state at the moment t₁, and limits a rising speed of drive torque output by a drive motor corresponding to the front shaft to the front shaft and a rising speed of drive torque output by a drive motor corresponding to the rear shaft to the rear shaft. In addition, all drive wheels of the vehicle slip. Therefore, the vehicle anti-slip pre-control system cannot perform torque transfer and reallocation.

It can be learned from FIG. 4 and FIG. 5 that, according to the control method provided in this application, a slip of the vehicle can be detected earlier than the TCS system, and the drive torque corresponding to the slipping drive wheel is controlled in advance, to prevent the vehicle from losing control of direction due to a large slip, thereby ensuring safety performance of the vehicle.

It may be understood that most examples in the foregoing embodiments are dual-motor new energy vehicles, and the control method provided in this application is also applicable to three-motor and even four-motor new energy vehicles.

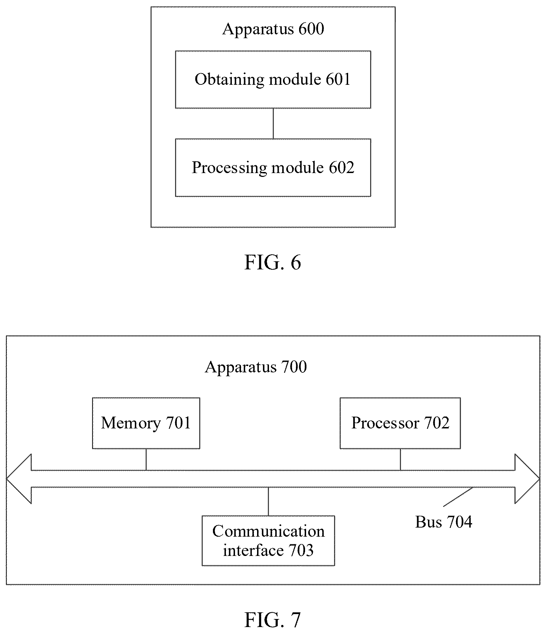

FIG. 6 is a diagram of a structure of a vehicle control apparatus according to an embodiment of this application. As shown in FIG. 6, the apparatus 600 in this embodiment may include an obtaining module 601 and a processing module 602.

The obtaining module 601 is configured to obtain an acceleration of a vehicle and an acceleration of a first drive wheel of the vehicle, and/or a wheel speed of the first drive wheel and a traveling speed of the vehicle.

When a first difference between the acceleration of the vehicle and the acceleration of the first drive wheel is greater than or equal to a first threshold, and/or a second difference between the wheel speed of the first drive wheel and the traveling speed of the vehicle is greater than or equal to a second threshold, the processing module 602 is configured to control a drive apparatus of the vehicle to output first torque to the first drive wheel, where the first torque is less than first required torque of the first drive wheel.

Optionally, controlling the drive apparatus of the vehicle to output the first torque to the first drive wheel includes:
the processing module 602 controls, based on the first difference and/or the second difference, the drive apparatus of the vehicle to output the first torque to the first drive wheel, where a larger first difference and/or a larger second difference indicate/indicates a larger torque difference between the first torque and the first required torque.

Optionally, the obtaining module 601 is further configured to obtain a gradient of a road on which the vehicle is located.

That the processing module 602 is configured to control the drive apparatus of the vehicle to output the first torque to the first drive wheel includes:
the processing module 602 controls, based on the gradient, the drive apparatus of the vehicle to output the first torque to the first drive wheel, where a larger gradient indicates a larger torque difference between the first torque and the first required torque.

Optionally, the processing module 602 is further configured to determine a difference between slip rates of a plurality of drive wheels of the vehicle, where the plurality of drive wheels include at least two of the first drive wheel, a second drive wheel, a third drive wheel, and a fourth drive wheel, the first drive wheel and the second drive wheel are connected to a first transmission shaft of the vehicle, the first drive wheel and the second drive wheel are located on different sides of the vehicle, the third drive wheel and the fourth drive wheel are connected to a second transmission shaft of the vehicle, the first drive wheel and the third drive wheel are located on a same side of the vehicle, and the first drive wheel and the fourth drive wheel are located on different sides of the vehicle.

That the processing module 602 is configured to control the drive apparatus of the vehicle to output the first torque to the first drive wheel includes:
the processing module 602 controls, based on the difference between the slip rates of the plurality of drive wheels, the drive apparatus of the vehicle to output the first torque to the first drive wheel, where a torque difference between the first torque and the first required torque is associated with the difference between the slip rates of the plurality of drive wheels.

In some implementations, the plurality of drive wheels include the first drive wheel and the second drive wheel.

When a third difference between a slip rate of the first drive wheel and a slip rate of the second drive wheel is greater than or equal to a third threshold, the torque difference is a first torque difference; or when the third difference is less than the third threshold, the torque difference is a second torque difference, and the processing module 602 controls the first torque difference to be greater than the second torque difference.

Optionally, the plurality of drive wheels further include the third drive wheel.

When a fourth difference between the slip rate of the first drive wheel and a slip rate of the third drive wheel is greater than or equal to a fourth threshold, the torque difference is a third torque difference, and the processing module 602 controls the first torque difference to be greater than the third torque difference.

Optionally, the plurality of drive wheels further include the fourth drive wheel.

When a fifth difference between the slip rate of the first drive wheel and a slip rate of the fourth drive wheel is less than a fifth threshold and the third difference is greater than or equal to the third threshold, the torque difference is a fourth torque difference, and the processing module 602 controls the fourth torque difference to be greater than the second torque difference and/or the third torque difference.

In some implementations, the vehicle includes the first transmission shaft and the second transmission shaft, the first transmission shaft is a transmission shaft connected to the first drive wheel, and the processing module 602 is further configured to control the drive apparatus of the vehicle to output second torque to a non-slipping wheel of the vehicle, where the non-slipping wheel is connected to the second transmission shaft, a difference between an acceleration of the non-slipping wheel and the acceleration of the vehicle is less than the first difference, and a difference between a wheel speed of the non-slipping wheel and the traveling speed of the vehicle is less than the second difference. The processing module 602 is configured to control the second torque to be greater than required torque of the non-slipping wheel, where a torque difference between the second torque and the second required torque of the non-slipping wheel is equal to the torque difference between the first torque and the first required torque.

In some implementations, after the drive apparatus of the vehicle is controlled to output the first torque to the first drive wheel for first duration, if a difference between the acceleration of the vehicle and the acceleration of the first drive wheel is greater than or equal to the first difference, and/or a difference between the wheel speed of the first drive wheel and the traveling speed of the vehicle is greater than or equal to the second difference, the processing module 602 is configured to control the drive apparatus of the vehicle to output third torque to the first drive wheel, where the third torque is less than the first torque.

It should be understood that the apparatus 600 is embodied in a form of a functional module. The term "module" may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function.

The apparatus 600 has functions of implementing corresponding procedures and/or steps in the foregoing method embodiments. The foregoing functions may be implemented by hardware, or may be implemented by hardware executing corresponding software. The hardware or the software includes one or more modules corresponding to the function.

FIG. 7 is a diagram of a structure of a service access apparatus according to another embodiment of this application. An apparatus 700 shown in FIG. 7 may be configured to perform the method performed by the vehicle control apparatus in any one of the foregoing methods.

As shown in FIG. 7, the apparatus 700 in this embodiment includes a memory 701, a processor 702, a communication interface 703, and a bus 704. A communication connection among the memory 701, the processor 702, and the communication interface 703 is implemented through the bus 704.

The memory 701 may be a read-only memory (read-only memory, ROM), a static storage device, a dynamic storage device, or a random access memory (random access memory, RAM). The memory 701 may store a program. When the program stored in the memory 701 is executed by the processor 702, the processor 702 is configured to perform any one of the foregoing methods.

The processor 702 may be a general-purpose central processing unit (central processing unit, CPU), a microprocessor, an application-specific integrated circuit, or one or more integrated circuits, and is configured to execute a related program.

Alternatively, the processor 702 may be an integrated circuit chip, and has a signal processing capability. In an implementation process, the related steps in embodiments of this application may be completed by using a hardware integrated logic circuit or an instruction in a form of software in the processor 702.

The processor 702 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 701. The processor 702 reads information in the memory 701, and completes, in combination with hardware of the processor 702, functions that need to be performed by units included in the apparatus in this application.

The communication interface 703 may use, but not limited to, a transceiver apparatus of a transceiver type, to implement communication between the apparatus 700 and another device or an apparatus.

The bus 704 may include a path for transferring information between components (such as the memory 701, the processor 702, and the communication interface 703) of the apparatus 700.

An embodiment of this application further provides a computer-readable storage medium. The computer-readable storage medium stores computer instructions. When executing the computer instructions, a processor implements the steps in the methods in the foregoing embodiments.

An embodiment of this application further provides a computer program product, including computer instructions. When the computer instructions are executed by a processor, the steps in the methods in the foregoing embodiments are implemented.

It should be noted that the modules or components shown in the foregoing embodiments may be one or more integrated circuits configured to implement the foregoing methods, for example, one or more application-specific integrated circuits, one or more microprocessors, or one or more field programmable gate arrays. For another example, when one of the foregoing modules is implemented in a form in which a processing element invokes program code, the processing element may be a general-purpose processor, for example, a central processing unit or another processor that can invoke program code, for example, a controller. For another example, the modules may be integrated together and implemented in a form of a system-on-a-chip (system-on-a-chip, SoC).

All or some of the foregoing embodiments may be implemented by using software, hardware, firmware, a software module, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

A person skilled in the art can easily figure out another implementation solution of this application after considering this specification and practicing the present invention that is disclosed herein. This application is intended to cover any variations, functions, or adaptive changes of this application. These variations, functions, or adaptive changes comply with general principles of this application, and include common knowledge or a commonly used technical means in the technical field that is not disclosed in this application. The specification and the embodiments are merely considered as examples, and the actual scope and spirit of this application are pointed out by the following claims.

It should be understood that this application is not limited to the accurate structures that are described in the foregoing and that are shown in the accompanying drawings, and modifications and changes may be made without departing from the scope of this application. The scope of this application is limited only by the appended claims.

## Claims

1. A vehicle control method, comprising:
obtaining an acceleration of a vehicle and an acceleration of a first drive wheel of the vehicle, and/or a wheel speed of the first drive wheel and a traveling speed of the vehicle; and
when a first difference between the acceleration of the vehicle and the acceleration of the first drive wheel is greater than or equal to a first threshold, and/or a second difference between the wheel speed of the first drive wheel and the traveling speed of the vehicle is greater than or equal to a second threshold, controlling a drive apparatus of the vehicle to output first torque to the first drive wheel, wherein the first torque is less than first required torque of the first drive wheel.

2. The method according to claim 1, wherein the controlling the drive apparatus of the vehicle to output the first torque to the first drive wheel comprises:
controlling, based on the first difference and/or the second difference, the drive apparatus of the vehicle to output the first torque to the first drive wheel, wherein a larger first difference and/or a larger second difference indicate/indicates a larger torque difference between the first torque and the first required torque.

3. The method according to claim 1 or 2, wherein the method further comprises: determining a gradient of a road on which the vehicle is located; and
the controlling the drive apparatus of the vehicle to output the first torque to the first drive wheel comprises:
controlling, based on the gradient, the drive apparatus of the vehicle to output the first torque to the first drive wheel, wherein a larger gradient indicates a larger torque difference between the first torque and the first required torque.

4. The method according to any one of claims 1 to 3, wherein the method further comprises: determining a difference between slip rates of a plurality of drive wheels of the vehicle, wherein the plurality of drive wheels comprise at least two of the first drive wheel, a second drive wheel, a third drive wheel, and a fourth drive wheel, the first drive wheel and the second drive wheel are connected to a first transmission shaft of the vehicle, the first drive wheel and the second drive wheel are located on different sides of the vehicle, the third drive wheel and the fourth drive wheel are connected to a second transmission shaft of the vehicle, the first drive wheel and the third drive wheel are located on a same side of the vehicle, and the first drive wheel and the fourth drive wheel are located on different sides of the vehicle; and
the controlling the drive apparatus of the vehicle to output the first torque to the first drive wheel comprises:
controlling, based on the difference between the slip rates of the plurality of drive wheels, the drive apparatus of the vehicle to output the first torque to the first drive wheel, wherein a torque difference between the first torque and the first required torque is associated with the difference between the slip rates of the plurality of drive wheels.

5. The method according to claim 4, wherein the plurality of drive wheels comprise the first drive wheel and the second drive wheel; and
when a third difference between a slip rate of the first drive wheel and a slip rate of the second drive wheel is greater than or equal to a third threshold, the torque difference is a first torque difference; or when the third difference is less than the third threshold, the torque difference is a second torque difference, and the first torque difference is greater than the second torque difference.

6. The method according to claim 5, wherein the plurality of drive wheels further comprise the third drive wheel; and
when a fourth difference between the slip rate of the first drive wheel and a slip rate of the third drive wheel is greater than or equal to a fourth threshold, the torque difference is a third torque difference, and the first torque difference is greater than the third torque difference.

7. The method according to claim 5 or 6, wherein the plurality of drive wheels further comprise the fourth drive wheel; and
when a fifth difference between the slip rate of the first drive wheel and a slip rate of the fourth drive wheel is less than a fifth threshold and the third difference is greater than or equal to the third threshold, the torque difference is a fourth torque difference, and the fourth torque difference is greater than the second torque difference and/or the third torque difference.

8. The method according to any one of claims 1 to 7, wherein the vehicle comprises the first transmission shaft and the second transmission shaft, the first transmission shaft is a transmission shaft connected to the first drive wheel, and the method further comprises:
controlling the drive apparatus of the vehicle to output second torque to a non-slipping wheel of the vehicle, wherein the non-slipping wheel is connected to the second transmission shaft, a difference between an acceleration of the non-slipping wheel and the acceleration of the vehicle is less than the first difference, a difference between a wheel speed of the non-slipping wheel and the traveling speed of the vehicle is less than the second difference, the second torque is greater than required torque of the non-slipping wheel, and a torque difference between the second torque and the second required torque of the non-slipping wheel is equal to the torque difference between the first torque and the first required torque.

9. The method according to any one of claims 1 to 8, wherein after controlling the drive apparatus of the vehicle to output the first torque to the first drive wheel for first duration, the method further comprises:
if a difference between the acceleration of the vehicle and the acceleration of the first drive wheel is greater than or equal to the first difference, and/or a difference between the wheel speed of the first drive wheel and the traveling speed of the vehicle is greater than or equal to the second difference, controlling the drive apparatus of the vehicle to output third torque to the first drive wheel, wherein the third torque is less than the first torque.

10. A vehicle control apparatus, wherein the apparatus is configured to implement the vehicle control method according to any one of claims 1 to 9.

11. A computer-readable storage medium, wherein the computer-readable storage medium stores computer-executable instructions, and when being executed by a processor, the computer-executable instructions are used to implement the vehicle control method according to any one of claims 1 to 9.

12. A computer program product, comprising a computer program, wherein when the computer program is executed by a processor, the vehicle control method according to any one of claims 1 to 9 is implemented.
